# EUROPEAN PATENT APPLICATION

(11) **EP 1 821 137 A1**
(43) Date of publication of application: **22.08.2007**
(21) Application number: 07405041.0
(22) Date of filing: 12.02.2007
(51) Int. Cl.: G02F 1/1337, A61F 9/06

(54) **Glare protection device**

(30) Priority: 17.02.2006 EP 06405072
(71) Applicant: OPTREL AG, 9630 Wattwil (CH)
(72) Inventor: Dufresne, Christophe, 25390 Guyans-Vennes (FR); Hones, Peter, 8610 Uster (CH); Cottier, Kaspar, 8645 Jona (CH)
(74) Representative: Frei Patent Attorneys

(57) **Abstract**

A glare protection filter, in particular for a welding mask or welding protection device comprising an electro-optical light filter 10 comprises at least one electro-optical cell (12, 13, 14, 15, 16, 17, 18) by which an amount of light transmitted through the filter is reducible, wherein at least a first one of the electro-optical cells comprises two parallel transparent plates (12, 18) having transparent electrodes (13, 17) on the inner surfaces thereof and containing a liquid crystal material (15) and orientation layers (14, 16) defining an anchoring of the liquid crystal material (15). Upon application of a voltage of less than 30V to the electrodes (13, 17), the molecule orientation in the liquid crystal material (15) near at least one of the orientation layers (14, 16) is subject to rotation of at least 10°.

## Description

### FIELD OF THE INVENTION

The invention relates to the field of glare protection devices. It relates to a glare protection device and a welding mask as described in the preamble of the corresponding independent patent claims.

### BACKGROUND OF THE INVENTION

Glare protection or dazzle protection devices are, for example, used in welding protection masks, helmets or goggles. In order to adapt to varying brightness conditions, active electro-optical cells or filter elements are used. Electro-optical filter devices for glare protection typically comprise a liquid crystal cell or LC-cell which is controlled to block light transmission to a greater or lesser extent when a light sensor detects harmful radiation or an activity leading to harmful radiation, for instance by sensing a light intensity exceeding a predefined threshold level and/or exhibiting certain dynamic properties such as jitter or flickering.

An important issue in the development of electro-optical glare protection devices is the speed, at which the filter switches from a bright to a dark state, in order to minimize eye irritation, thus increasing the comfort and safety of the user. A further issue is the viewing angle dependency of the amount of transmitted light, which should, within a certain range of angles, be as small as possible, corresponding to a uniform transmission over varying viewing angles.

US 6,727,968 B1 describes devices/configurations presenting weak anchoring on at least one surface, and methods for realizing low anchorage energies. Reduced "on"-switching time, and reduced threshold level leading to lower power consumption are disclosed as well. US 6,327,017 B2 and related publications describe the realization of a bistable device using low anchoring energies.

An analysis of weak-boundary-coupling effects in liquid-crystal displays, is given in Nehring, J.; Kmetz, A. R.; Scheffer, T., J. Journal of Applied Physics, Volume 47, Issue 3, March 1976, pp.850-857. The article describes fundamentals for weak anchoring cells, in particular reduced "on" switching speed, and low threshold level.

JP 08 271901 A discloses a liquid crystal display element having a wide visual field by dividing each pixel region into a partial pixel, and making the anchoring strength of the first and second half pixels to have different values. The maximum brightness of one part of the pixel region and the minimum brightness of the other part are generated by the same voltage. The average voltage-brightness characteristics of the partial pixels are expressed as a monotonous falling or rising curve.

WO 92/14183 A1 shows an eye protection device for welding helmets using an autodarkening filter with a liquid crystal device. It is mentioned that residual birefringence occurs due to the inability to align all of the liquid crystal material with respect to the electric field, due to the anchoring of the liquid crystal material at the surfaces of the cell plates. In order to compensate for this misalignment, additional wave plates are introduced.

US 6,7272,968 B1 discloses alignment layers that result in weak anchoring of the liquid crystal molecules in the tilt direction (zenital direction) and having an improved optical contrast ratio and a slight increase in the steepness of the electrooptical response.

It is therefore known from the prior art that such a weak anchoring may be applied to reduce "on" switching speed, contrast ratio, and the power consumption.

### DESCRIPTION OF THE INVENTION

It is the object of the present invention to provide special arrangements of such cells for use in glare protection devices and welding masks making use of these advantages. Another object of the invention is to provide anti-glare devices presenting low angular dependence of their transmission in the dark state.

These objects are achieved by a glare protection device and a welding mask according to the corresponding independent patent claims.

The glare protection filter for a welding mask or welding protection device comprising an electro-optical light filter comprising at least one electro-optical cell by which an amount of light transmitted through the filter is reducible, wherein at least a first electro-optical cells comprises two parallel transparent plates having transparent electrodes on the inner surfaces thereof and containing a liquid crystal material. Orientation layers define an anchoring of the liquid crystal material with respect to the electrodes or plate. Upon application of a voltage of less than 30V to the electrodes, the bulk liquid crystal molecules change their orientation due to the interaction of the electric field with the anisotropic molecules, as is known in current liquid crystal cells. In addition, according to the present invention, the director orientation of the liquid crystal molecules near at least one of the orientation layers is subject to rotation of at least 10°. In a preferred embodiment of the invention, the rotation of the molecule orientation is at least 20° or at least 45°, and the voltage applied is less than 20V or less than 5V. The rotation takes place around either one or both of
- a zenith angle or tilt angle, i.e. the angle of the molecule orientation with respect to the respective orientation layer seen in a projection onto a plane perpendicular to the orientation layer and comprising the molecule;
- an azimuth angle or twist angle, i.e. the angle of the molecule orientation with respect to the respective orientation layer seen in a projection onto the plane of the orientation layer .

The corresponding electrodes of the at least one electro-optical cell each contains at least one large area which is not structured into a plurality of pixels but is controlled in its entirety. This distinguishes it from LCD displays that can not be used as glare protection devices since structured elements introduce scattered light which is strictly limited by the standards such as EN 166. Furthermore, the contrast ratio achieved by structured displays is too low since the border regions between the pixels introduce unacceptable light leakage. Said large area preferably has a size of 25mm by 25mm, 30mm by 30mm, or more; or an area of 900mm² or more.

The rotation of the surface molecule orientation is a result of weak anchoring at the orientation layer surface. Weak anchoring at a surface is characterized by the rotation of the director alignment i.e. molecule orientation at this surface upon application of a voltage above a certain level. Without this, at the surfaces, the molecule orientation remains fixed due to the strong chemical and physical bonds between molecules and surfaces. The low anchorage energy may affect the zenithal or the azimuthal anchorage energy, or both. A strong anchoring means e.g. that voltages below 30V effect an orientation change of less than 1°. Here, and for other references to cell voltage, typical plate distances are 2 to 10 micrometers.

In a preferred embodiment of the invention, upon application of a voltage of less than 30V to the electrodes, the director orientation of said liquid crystal molecules at the surface of both orientation layers is subject to rotation of at least 10°, and the rotation of the director at least at one of said orientation layers does not exceed 60° at the highest operating voltage, which is needed to achieve the maximum shade level of the anti-glare device.

Using polarizers, and adapting the distribution of molecule orientation within the cell (called director profile) in the activated and inactivated state to the requirements of the application, the optical characteristics of the cell can be adjusted in a way to obtain an electro-optical filter or shutter reducing the amplitude of the transmitted light. The light attenuation may either be continuously variable, or operating in an on/off mode, for instance by using bistable cells such as described in the initially referenced US 6,327,017 B2.

Cells using low anchorage energy may be, but are not restricted to: homogeneously or hybrid aligned (HAN) or bend-mode cells (nematic without twist, acting as electro-optically tunable retarder), twisted nematic cells with 90° twist or low twisted (less than 90°) or high and supertwisted (more than 90°), Vertically aligned nematic (VAN), bistable devices as described in the initially referenced patents, and also ferroelectric and cholesteric devices.

The use of weak anchoring layers within these cells, according to the present invention, allows for tuning the electro-optical response of the cells to the requirements of anti-glare devices, especially concerning fast switching times, low power consumption, and, surprisingly, low viewing angle dependence. Thus anti-glare devices with superior performance than state-of-the art devices can be built. In a preferred embodiment of the invention, the glare protection device comprises a second electro-optical filter that is based on well known liquid crystal technology such as twisted-nematic cells. Here, as in other embodiments in which two or more electro-optical filters are present, they are arranged in a serial configuration, i.e. such that light passes through both of them and the reduction of transmitted light is achieved by the cumulative effect of both filters. In one preferred embodiment, for achieving the desired dark state, the first cell is switched to its blocking state, and the transmittance of the second cell is adjusted according to the intensity of light that is to be reduced. This embodiment allows on the one hand for a higher class of protection thanks to the two filters, and on the other hand for lower overall power consumption. Furthermore, the combination of filters may be controlled as to provide fast "on" switching of one cell, providing a minimum protection level, and then controlling and adapting the darkening by means of the other cell. Correspondingly, the protection device comprises a control means configured to control the voltages of the cells individually, such as the cells may be operated under different voltages, and to control at least one of the second and first electro-optical cells to have a continuously varying transmittance. For example, the two cells are operated with a different control signal with at least one of a different amplitude, a different frequency, and a different pulse shape.

In a further preferred embodiment of the invention, the second electro-optical cell is structured in the same manner as the first one, in particular with at least one weak anchoring layer. It is structured in a way that the geometry of the second cell is at least approximately the mirror image of the first cell. This embodiment allows on the one hand for a higher class of protection thanks to the two filters, and has an improved viewing angle tolerance, since light leakage within one filter (at certain viewing directions) are compensated for by higher attenuation within the other filter, and vice versa.

In a further preferred embodiment of the invention, each of the two electro-optical cells comprises a weak orientation layer at which said rotation of molecules takes place, and an opposing strong anchoring layer at which the molecules remain aligned with the anchoring direction. The directions of the strong anchoring layers are at least approximately equal, i.e. when viewed in a projection on the plane defined by the cell.

In a further preferred embodiment, both of the orientation layers within at least one cell are weak orientation layers at which said rotation of molecules takes place. The anchoring may be of approximately same strength resulting in approximately the same rotation upon application of a certain voltage, or may differ in strength such as different rotation angles result. In this configuration, the anchoring of at least one of the anchoring layers must have sufficient strength such that the director molecule rotation near the anchoring layer is not larger than 60°. As a result, the relaxation of the cell is well defined, does not result in random domain formation, and takes place at a sufficiently high speed.

The glare protection device according to the invention may further comprise additional filters for infrared and/or for ultraviolet light, and/or retarder foils placed between LC and polarizer(s) for compensating for viewing angle dependency.

A welding mask according to the invention comprises a glare protection device according to the invention. In addition to welding applications, the invention is also suited for application in other eye protecting devices such as sunglasses, and in devices where light or image sensors are to be protected from an excess of light.

Further preferred embodiments are evident from the dependent patent claims.

### BRIEF DESCRIPTION OF THE DRAWINGS

The subject matter of the invention will be explained in more detail in the following text with reference to preferred exemplary embodiments which are illustrated in the attached drawings, which schematically show, in
- Figure 1: a cross section of an electro-optical filter according to the invention;
- Figure 2: relevant orientations of the arrangement according to Figure 1;
- Figure 3: a preferred configuration;
- Figure 4: a further preferred configuration; and
- Figure 5: an exemplary voltage trajectory for controlling electro-optical cells.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

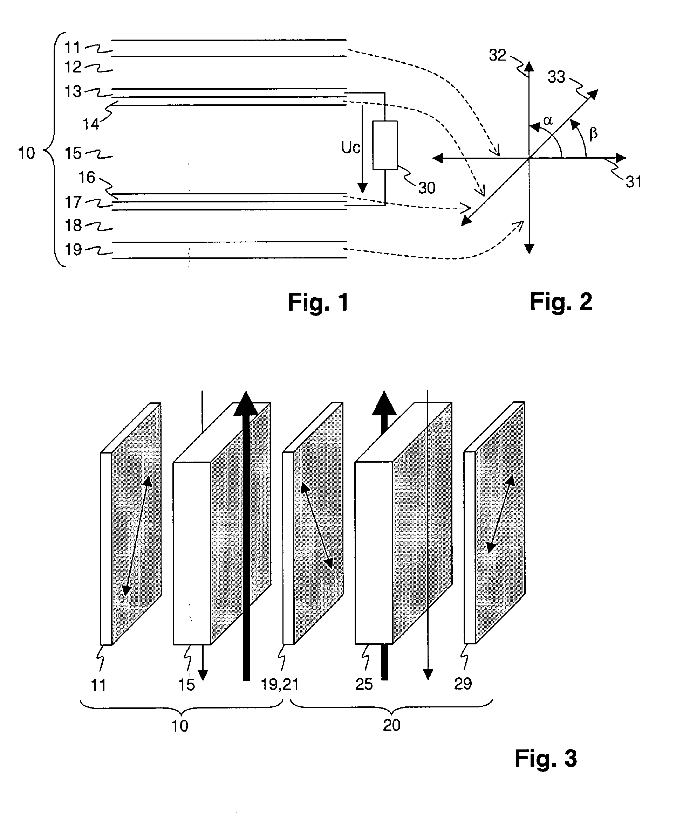

**Figure 1** schematically shows a cross section of an electro-optical light filter 10 comprising an electro-optical cell comprising two parallel transparent plates having transparent electrodes on the inner surfaces thereof and containing a nematic liquid crystal material, means defining an anchoring for each plate, and means controllable to break at least one of the anchoring.

The filter 10 comprises a first polariser 11, a first substrate, such as a glass plate 12, a first electrode, such as an indium tin oxide (ITO) layer 13, a strong orientation or anchoring layer 14, a layer of nematic liquid crystals 15, a weak orientation layer 16, a second ITO layer 17, a second substrate 18 and a second polariser 19. The nematic cell is constituted by said components, with the exception of the polarisers 11, 19. The filter is controlled by a voltage source 30.

In a preferred embodiment of the invention, a cell, and in particular its second ITO layer 17, is not structured into a plurality of pixels but is controllable in its entirety, that is, over its entire active surface, by a single signal.

The scheme in figure 1 shows the layers relevant to the present invention. In the actual implementation, the cell arrangement may contain further layers, such as electrically insulating layers between the ITO and orientation layers.

**Figure 2** shows relative orientation angles for the arrangement according to Figure 1, as viewed in the direction perpendicular to the cell plane. Given an orientation 31 of the first polarizer 11 as a reference, the second polarizer 19 has its orientation 32 at an angle α, which preferably is at least approximately 90 degrees. For a nematic cell with parallel orientation layers, their common orientation 33 is the angle β, which is preferable at least approximately 45 degrees, with respect to the orientation 31 of the first polarizer 11.

**Figure 3** schematically shows another preferred embodiment of the invention, in which two of the electro-optical filters 10, 20 are stacked on each other, i.e. in a serial configuration. For clarity, the substrates, electrode and orientation layers are not drawn individually. Instead the direction and strength of the orientation layers is indicated, a thick arrow representing a strong orientation layer, and a thin arrow representing a weak orientation layer.

The second filter 20 is structured in the same manner as the first 10, with a liquid crystal layer 25, glass substrates , ITO layers, orientation layers (substrate, ITO and orientation layers are not depicted) and polarisers 21, 29. The polariser 21 adjacent to the second polariser 19 of the first filter 10 may be omitted and its function taken over by said second polariser 19.

In a preferred embodiment, the two filters 10, 20 are two homogenously aligned nematic cells, each having a weak and a strong anchoring layer running in the direction opposed to one another, or at an angle between 170 and 190 degrees. The strong anchoring layers both face the inside of the device The device further comprises polarising plates in between and outside the two electro-optical cells, the polarising angles of which are at an angle of at least approximately 45°, or at an angle between 35 and 55 degrees, with respect to the direction of the closest (nearest, neighbouring, adjacent) orientation layer. In a further preferred embodiment of the invention, cells of different type are combined, in particular a twisted nematic cell and a homogenously aligned cell.

In another preferred embodiment of the invention, a first orientation layer of the first filter 10 is the weak orientation layer, and a second orientation layer of the first filter 10 is the strong one, a first orientation layer of the second filter 20 is the strong orientation layer, and a second orientation layer of the second filter 20 is the weak one. Thus, the first and second electro-optical cells are oriented with the strong anchoring layer of the first cell being adjacent to the strong anchoring layer of the second cell - and separated of course by the corresponding electrodes, glass substrates (not depicted) and one or two polarisers 19, 21. In this configuration, the strong orientation directions are at least approximately equal, differing by less than 10°.

In another preferred embodiment of the invention, the first orientation layer of the first filter 10 is the strong orientation layer, and the second orientation layer of the first filter 10 is the weak one, the first orientation layer of the second filter 20 is the weak one, and the second orientation layer of the second filter 20 is the strong one. Thus, the first and second electro-optical cells are oriented with the weak anchoring layers of the two cells being adjacent to each other. In this configuration, the strong orientation directions are at least approximately equal, differing by less than 10°.

In another preferred embodiment of the invention, the strong anchoring layer of one of the two cells are adjacent to the weak anchoring layer of the other. In this configuration, the strong orientation directions are at least approximately opposed to each other, differing by an angle between 170° and 190°.

For another embodiment, in which the inactive state of the device is a darkened or "black" state, and activating the cells makes the device transparent, one or more of the polarising plates 11, 19, 29 are rotated.

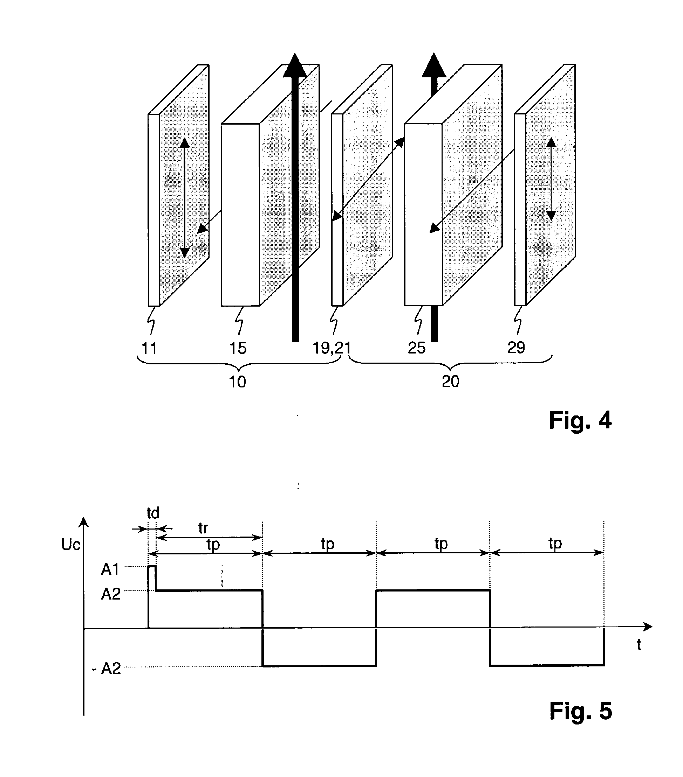

**Figure 4** shows a further preferred configuration: The glare protection device comprises two twisted nematic cells 10, 20, each having a weak and a strong anchoring layer running at a right angle to one another, or at an angle between 60 and 120 degrees, The strong anchoring layers both face the inside of the device. The device further comprises polarising plates in between and outside the two electro-optical cells, the polarising angles of which lie at least approximately at a right angle, or at an angle between 80 and 100 degrees, with respect to the direction of the neighbouring orientation layer(s). Furthermore, the orientations of the inner anchoring layers are approximately equal, or at an angle smaller than 10°, and the orientations of the outer anchoring layers are also approximately equal, or at an angle smaller than 10°. In another variant of this configuration, the strong anchoring layers both are oriented towards the outside of the device.

In a preferred embodiment of the invention, the polarisers 11, 19, 21, 29 are high contrast polarisers, the cell gap of the LC cells 10, 20 lies in the range from 1 to 2 and preferably 1.5 micrometers, and the the LC material is 5CB (pentylcyanobiphenyl).

The transmittance of one or both of the first and second filters 10, 20 is controlled by a voltage source configured to provide either a constant DC voltage, a variable DC voltage, or a periodic voltage signal with at least one of a variable amplitude, a variable frequency, and a variable pulse shape.

**Figure 5** shows an exemplary voltage trajectory Uc comprising a series of pulses of opposing polarity and having a pulse period tp. The very first pulse comprises an initial, higher level pulse of a switch-on time td. At the beginning of the switch-on time td the voltage rises to a switch-on amplitude A1 (which is positive or negative, according to pulse polarity) and then sinks to a lower amplitude A2 and remains there for the activation time tr, until an inverted pulse occurs. The remaining pulses are ordinary square pulses with negative and positive polarity.

In preferred embodiments of the invention,
- tp may vary from 1ms to 10s
- tr may vary from 0 to 100% of tp
- A2 may vary from 1*A1 to 50*A1

In a preferred embodiment of the invention, no special switch-on amplitude A1 is required, since the optical cells switch fast enough.
Preferably, the first and second electro-optical cells are arranged to be controlled by the same voltage signal (Uc).

While the invention has been described in present preferred embodiments of the invention, it is distinctly understood that the invention is not limited thereto, but may be otherwise variously embodied and practised within the scope of the claims.

## Claims

1. A glare protection device comprising an electro-optical light filter (10) comprising at least one electro-optical cell (12, 13, 14, 15, 16, 17, 18) by which an amount of light transmitted through the filter is reducible, wherein at least a first electro-optical cell comprises two parallel transparent plates (12, 18) having transparent electrodes (13, 17), the electrodes comprising at least one area of at least 900mm², which is not structured into a plurality of pixels but being controlled in its entirety, on the inner surfaces thereof and containing a liquid crystal material (15), and orientation layers (14, 16) defining an anchoring of the liquid crystal material (15), **characterised in that**, upon application of a voltage of less than 30V to the electrodes (13, 17), the director orientation of the liquid crystal molecules (15) at the surface of at least one of the orientation layers (14, 16) is subject to rotation of at least 10°, where the rotation is either one or a combination of a zenith angle, i.e. the angle of the molecule orientation with respect to the respective orientation layer (14, 16) seen in a projection onto a plane perpendicular to the orientation layer (14,16) and comprising the molecule, or an azimuth angle, i.e. the angle of the molecule orientation with respect to the respective orientation layer (14, 16) seen in a projection onto the plane of the orientation layer (14,16).

2. The glare protection filter of claim 1, wherein the rotation of the molecule orientation is at least 20° and preferably at least 45°.

3. The glare protection filter of claim 1 or claim 2, wherein the voltage applied is less than 20V and preferably less than 5V.

4. The glare protection filter of one of the preceding claims, **characterised in that**, upon application of a voltage of less than 30V to the electrodes (13, 17), the director orientation of said liquid crystal molecules (15) at the surface of both orientation layers (14, 16) is subject to rotation of at least 10°, and that the rotation of the director at least at one of said orientation layers does not exceed 60° under all operating conditions.

5. The glare protection filter of one of the preceding claims, comprising a second electro-optical cell (20) arranged in a serial configuration with the first electro-optical cell (10), where the two cells are operated with a different control signal with at least one of a different amplitude, a different frequency, and a different pulse shape.

6. The glare protection filter of one of Claims 1 to 5, comprising a second electro-optical cell (20) arranged in a serial configuration with the first electro-optical cell (10) and comprising two parallel transparent plates (22, 28) having transparent electrodes (23, 27) on the inner surfaces thereof and containing a liquid crystal material (25), orientation layers (24, 26) defining an anchoring of the liquid crystal material (25) wherein, upon application of a voltage of less than 30V to the electrodes (23, 27), the molecule orientation in the liquid crystal material (25) at the surface of at least one of the orientation layers (24, 26) is subject to rotation of at least 10°, where the directions of the inner orientation layers (16,24) are at least approximately parallel to each other differing by less than 20°, and the directions of the outer orientation layers (14,26) are at least approximately parallel to each other differing by less than 10°.

7. The glare protection device of claim 6, wherein each of the two electro-optical cells (10, 20) comprises a weak orientation layer at which said rotation of molecules takes place, and an opposing strong anchoring layer at which the molecules remain aligned with the anchoring direction under all operating conditions, and wherein the directions of the strong anchoring layers are at least approximately parallel to each other or differing by less than 10°, and the configuration having a mirror symmetry such as
• either said strong anchoring layers being both inner orientation layers (16,24) and said weak anchoring layers being the outer orientation layers (14,26)
• or said strong anchoring layers being the outer orientation layers (14,26) and said weak anchoring layers being the inner orientation layers (16,24).

8. The glare protection device of claim 6, wherein each of the two electro-optical cells (10, 20) comprises a weak orientation layer at which said rotation of molecules takes place, and an opposing strong anchoring layer at which the molecules remain aligned with the anchoring direction under all operating conditions, and wherein the directions of the strong anchoring layers are at least approximately opposed to each other by 180°, or at an angle between 170° and 190°, and the sequence of layers of the two cells is identical, such as
• either said strong anchoring layers being both first orientation layers (14,24) and said weak anchoring layers being the second orientation layers (16,26)
• or said strong anchoring layers being the second orientation layers (16,26) and said weak anchoring layers being the first orientation layers (14,24).

9. The glare protection filter of one of the preceding claims, wherein at least one of the electro-optical cells (10, 20) having a low anchoring energy is a homogenously aligned nematic cell without twist, or a twisted nematic cell, or a vertically aligned nematic (VAN) cell, or a bistable nematic cell.

10. The glare protection device of one of claims 6 to 8, comprising two homogenously aligned nematic cells (10, 20), each having a weak and a strong anchoring layer running in the same direction and parallel to one another, or at an angle smaller than 10 degrees, and the strong anchoring layers either both facing the inside or both facing the outside of the device, the device further comprising polarising plates in between and outside the two electro-optical cells, the polarising angles of which are at an angle of at least approximately 45°, or at an angle between 35 and 55 degrees, with respect to the direction of the closest orientation layer.

11. The glare protection device of one of claims 6 to 8, comprising two twisted nematic cells (10, 20), each having a weak and a strong anchoring layer running at a right angle to one another, or at an angle between 60 and 120 degrees, and the strong anchoring layers either both facing the inside or both facing the outside of the device, the device further comprising polarising plates in between and outside the two electro-optical cells, the polarising angles of which lie at least approximately at a right angle, or at an angle between 35 and 55 degrees, with respect to the direction of the neighbouring orientation layer(s).

12. The glare protection device of one of claims 1 to 11, comprising a control means configured to control at least one of the second and first electro-optical cells to have a continuously varying transmittance.

13. The glare protection device of one of claims 1 to 11, comprising a control means configured to drive at least one of the second and first electro-optical cells to one or several distinct transmittance states.

14. The glare protection device of one of claims 12 to 13, wherein the control means is configured to provide, to at least one of the first and second electro-optical cells (10, 20), a periodic voltage signal (Uc) with at least one of a variable amplitude, a variable frequency, and a variable pulse shape.

15. The glare protection device of one of claims 6 , 7, 8, 10 or 11, wherein the first and second electro-optical cells (10, 20) are arranged to be controlled by the same voltage signal (Uc).

16. A welding mask comprising a glare protection device according to one or more of claims 1 to 15.
